# EUROPÄISCHE PATENTSCHRIFT

(11) **EP 2 205 106 B1**
(45) Veröffentlichungstag und Bekanntmachung des Hinweises auf die Patenterteilung: **07.11.2012**
(21) Anmeldenummer: 08801728.0
(22) Anmeldetag: 27.08.2008
(51) Int. Cl.: A24C 5/00, B65B 19/28, A24C 5/31, G05B 19/406, B65B 65/00, B65B 65/02

(54) **FERTIGUNGSEINHEIT SOWIE VERFAHREN ZUM BETREIBEN DER FERTIGUNGSEINHEIT**
PRODUCTION UNIT AND METHOD FOR OPERATING THE PRODUCTION UNIT
UNITÉ DE FABRICATION ET PROCÉDÉ POUR EXPLOITER L'UNITÉ DE FABRICATION

(30) Priorität: 05.10.2007 DE 102007048053
(43) Veröffentlichungstag der Anmeldung: 14.07.2010
(73) Patentinhaber: Focke & Co. (GmbH & Co. KG), 27283 Verden (DE)
(72) Erfinder: LINKE, Wolfgang, 13467 Berlin (DE); GRUNDMANN, Eckhard, 27305 Bruchhausen-Vilsen (DE)
(74) Vertreter: Aulich, Martin
(86) Internationale Anmeldenummer: PCT/EP2008/006999
(87) Internationale Veröffentlichungsnummer: WO 2009/046788

(56) Entgegenhaltungen:
- EP-A- 0 963 913
- EP-A- 1 232 949
- DE-A1- 3 926 413
- DE-A1- 4 216 824

## Beschreibung

Die vorliegende Erfindung betrifft ein Verfahren zum Betreiben einer Fertigungseinheit einer Produktionsanlage im Einrichtbetrieb, insbesondere einer Fertigungs- und/oder Verpackungsanlage für Zigaretten oder andere rauchbare Artikel, mit wenigstens einem Hauptantrieb und zumindest einem vorzugsweise als Servoantrieb ausgebildeten Nebenantrieb, dessen Bewegung direkt oder indirekt von der Bewegung einer Masterwelle des Hauptantriebs abhängt, sowie mit einem mit der Masterwelle mechanisch oder elektronisch koppelbaren, von einem Bediener handbetätigbaren Stellorgan, vorzugsweise einem Handrad, mit dem die Masterwelle des Hauptantriebs außerhalb des Normalbetriebs bei Bedarf von einem Bediener in Rotation versetzt werden kann: Die Erfindung betrifft des Weiteren eine Fertigungseinheit, die nach dem genannten Verfahren arbeitet.

Eine solche Produktionsanlage umfasst in der Zigarettenindustrie in der Regel eine Anzahl unterschiedlicher, aber im Fertigungs- und/oder Verpackungsprozess miteinander kombinierter Fertigungseinheiten, etwa eine Zigarettenherstellungsmaschine, eine Verpackungsmaschine, eine Folieneinschlagmaschine sowie gegebenenfalls einen Gebindepacker und einen Kartonpacker. Dabei werden die Geschwindigkeiten innerhalb der einzelnen Fertigungseinheiten koordiniert im Hinblick auf eine Geschwindigkeit eines zentralen Antriebs der jeweiligen Fertigungseinheit, der auch als Hauptantrieb oder Masterantrieb bezeichnet wird. Von der Geschwindigkeit der Masterwelle werden die Geschwindigkeiten aller anderen, Neben- oder Slave-Antriebe genannten Antriebe der Fertigungseinheit abgeleitet.

Im Servicefall ist ein Eingriff in die Produktionsanlage, insbesondere in eine einzelne Fertigungseinheit erforderlich. Bei einem solchen Eingriff, d.h. während des Einrichtbetriebs, wird die Anlage grundsätzlich außer Betrieb gesetzt. Es kann allerdings erforderlich sein, die Anlage, insbesondere einzelne Aggregate einer Fertigungseinheit, während des Einrichtbetriebs mit einer kontrollierten Geschwindigkeit wieder in Betrieb zu setzen, um beilspielsweise die Erreichbarkeit verschiedener verdeckter Bauteile zu ermöglichen. Zu diesem Zweck ist es bekannt, die Masterwellen von Anlagen bzw. Fertigungseinheiten mittels eines im Servicefall mit der Welle direkt oder indirekt koppelbaren Handrades weiterzubewegen, wodurch im Ergebnis auch die Nebenantriebe weiterbewegt werden. Problematisch im Einrichtbetrieb ist die Verletzungsgefahr von Bedienern oder anderen Personen, die sich im Umfeld der Anlage befanden. Die Geschwindigkeiten, mit denen sich dabei die abhängigen Nebenantriebe bewegen, können erheblich über denen der Masterwelle liegen. Beilspielsweise kann die Weiterbewegung der Masterwelle eine schnelle, einen Bediener gefährdende Siegelbewegung eines von einem Nebenantrieb bewegten Siegelaggregats auslösen.

Um die Verletzungsgefahr zu reduzieren ist bekannt, einzelne Abschnitte der Anlage mit Schutzeinrichtungen zu versehen, insbesondere Hauben, die die sich bewegenden, möglicherweise gefährdenden Bauteile verdecken. Nur im Einrichtbetrieb werden dann ein oder mehrere Hauben geöffnet. Beim Öffnen einer der Hauben geht die Anlage üblicherweise automatisch in den Stillstand.

Bei den bisher bekannten Anlagen werden die einzelnen Nebenantriebe nach dem Öffnen der Schutzeinrichtungen dann aktiv geschaltet, wenn das Handrad gezogen wird, d. h. mit der Masterwelle gekoppelt wird. Bei längerem Stillstand der Anlage besteht allerdings die Gefahr, dass der Bediener vergisst, dass sich die Anlage im Einrichtbetrieb mit aktiv geschalteten Nebenantrieben befindet. Eine unbewusste Bewegung am Handrad, etwa durch den Bediener, kann das Anlaufen der Nebenantriebe mit erheblichem. Gefahrenpotential zur Folge haben. Des Weiteren kann ein Gerätefehler oder ein elektromagnetischer Störimpuls den aktiv geschalteten Nebenantrieb fehlerhafterweise zum Anlaufen bringen.

Aufgabe der vorliegenden Erfindung ist es daher, ein Verfahren zum Betreiben einer Fertigungseinheit elner Produktionsanlage der eingangs genannten Art im Einrichtbetrieb anzugeben, das eine möglichst hohe Sicherheit vor einem ungewollten Anlaufen der Nebenantriebe bietet. Es ist des Weiteren Aufgabe der vorliegenden Erfindung, eine Fertigungseinheit anzugeben, die nach einem derartigen Verfahren arbeitet.

Die Aufgabe wird gelöst mit einem Verfahren, das die Merkmale des Anspruchs 1 aufweist. Die Aufgabe wird des Weiteren gelöst durch eine Fertigungseinheit mit den Merkmalen des Anspruchs 8.

Demnach ist das erfindungsgemäße Verfahren dadurch gekennzeichnet, dass im Einrichtbetrieb, also außerhalb des Normal- oder Automatikbetriebs, der Nebenantrieb nach Kopplung des handbetätigbaren Stellorgans mit der Masterwelle ausgelöst durch eine vorzugsweise mindestens einer vorbestimmten Bedingung entsprechende-Betätigung des Stellorgans ausgehend von einem inaktiven Zustand des Nebenantriebs, nämlich einem Zustand, indem ein insbesondere ungewolltes Anlaufen des Nebenantriebs im Wesentlichen ausgeschlossen ist, in einen aktiven Zustand überführt wird, nämlich in einen Zustand, in dem ein Anlaufen des Nebenantriebs ermöglicht ist.

Bevorzugt wird der Nebenantrieb dabei durch Betätigung des Stellorgans aus einem sicheren Stillstand, insbesondere aus dem sicheren Halt, in den Betriebszustand, insbesondere den Betriebszustand der sogenannten Lageregelung, überführt.

Erfindungsgemäß wird der mindestens eine Nebenantrieb im Gegensatz zum Stand der Technik daher nicht schon dann aktiviert, wenn das handbetätigte Stellorgan, üblicherweise ein mechanisches oder elektronisches Handrad, mit der Masterwelle gekoppelt wird. Vielmehr wird die Aktivierung erst durch eine geeignete Betätigung des Stellorgans seilens des Bedleners ausgelöst. Zuvor befindet sich der Nebenantrieb in einem inaktiven Zustand, In dem ein ungewolltes Anlaufen desselben nahezu ausgeschlossen ist.

Ein derartig inaktiver Zustand kann in einfachster Ausführung bedeuten, dass der Nebenantrieb ausgeschaltet, nämlich strom- und/oder spannungslos geschaltet ist. In der Regel wird der Nebenantrieb als Servoantrieb ausgebildet sein, d. h. mit Servosteller und Servomotor. In dem inaktiven Zustand kann dabei der Servosteller und/oder der Servomotor strom- und/oder spannungslos sein.

Wichtig ist, dass der Servoantrieb im inaktiven Zustand in einem sogenannten sicheren Stillstand verharrt. Wie der Fachmann des Standes der Technik weiß, gibt es für die Möglichkeiten der technischen Umsetzung eines sicheren Stillstands bei Servoantrieben verschiedenste Möglichkeiten, etwa den sicheren Halt. Einige der Möglichkeiten sind in den entsprechenden Normen zu einem sicheren Halt von Antrieben enthalten.

Was die Aktivierung des Nebenantriebs betrifft, so muss diese nicht unmittelbar bei Beginn der Betätigung des Stellorgans erfolgen. Sie kann etwa auch zeitversetzt ausgelöst werden, belspielsweise nachdem das Stellorgan eine bestimmte Zeitspanne betätigt wurde. Vorzugsweise ist die Aktivierung des Nebenantriebs allerdings abhängig von der durch die Betätigung des Stellorgans bewirkten Drehzahl des Stellorgans und/oder der Masterwelle und/oder abhängig von dem durch die Stellorganbetätigung bewirkten Drehwinkel des Stellorgans und/oder der Masterwelle. Besonders bevorzugt erfolgt die Aktivierung bei einem Wert der Drehzahl oder des Drehwinkeis des Stellorgans und/oder der Masterwelle, der - bevorzugt über eine vorbestimmte Zeitspanne - gleich oder größer einem vorbestimmten Drehzahlgrenzwert ist.

In weiterer bevorzugter Ausbildung der Erfindung wird der Nebenantrieb abhängig von bestimmten Bedingungen wieder deaktiviert, nämlich in den inaktiven Zustand überführt. Vorzugsweise wird der Nebenantrieb dabei nach einer erfolgten Aktivierung abhängig von der Drehzahl und/oder dem Drehwinkel des Stellorgans und/oder der Masterwelle und/oder der Welle des Nebenantriebs deaktiviert. Er kann auch alternativ oder zusätzlich abhängig von der Zeit, die etwa das Stellorgan nicht betätigt wurde, deaktiviert werden. Besonders bevorzugt erfolgt die Deaktivierung bei einem Wert der Drehzahl des Stellorgans und/oder der Masterwelle, der - vorzugsweise über eine vorbestimmte Zeitspanne - gleich oder kleiner einem vorbestimmten Drehzahlgrenzwert ist.

Gemäß einem weiteren eigenständigen Aspekt der Erfindung wird eine durch Betätigung des Stellorgans bewirkte Bewegung des Stellorgans und/oder der Masterwelle abhängig von der Drehzahl und/oder abhängig vom Drehwinkel des Stellorgans und/oder der Masterwelle für eine kurze Zeitspanne gebremst, insbesondere gestoppt, sodass eine Synchronisierung der Welle des Nebenantriebs mit der Masterwelle des Hauptantriebs ermöglicht wird bzw. automatisch erfolgt. Bevorzugt erfolgt das genannte Bremsen bzw. Stoppen bevor eine Aktivierung des Nebenantriebs eingeleitet wurde.

Etwa wenn die Aktivierung des Nebenantriebs nicht unmittelbar bei Beginn der Betätigung des Stellorgans erfolgt, sondern erst nach einer gewissen Zeitdauer oder erst, wenn die Masterwelle durch Bestätigung des Stellorgans um einen gewissen Drehwinkel bewegt wurde, wird hierdurch erreicht, dass der Nebenantrieb mit der Masterwelle synchronisieren kann. Die Masterwelle wird mit anderen Worten für eine gewisse Zeitspanne gebremst, in der die Welle des Nebenantriebs die Masterwelle gewissermaßen "einholen" kann.

Erfindungsgemäß wird zweckmäßigerweise der Nebenantrieb auch durch Betätigung des Stellorgans nicht aktiviert oder der Nebenantrieb nach zuvor erfolgter Aktivierung deaktiviert, falls der Drehwinkel der Welle des Nebenantriebs von mindestens einer vorgegebenen Bedingung abweicht, bevorzugt falls der für eine Synchronisation der Welle des Nebenantriebs notwendige Drehwinkelwert größer oder gleich einem vorbestimmten Grenzwert ist. Falls also der Drehwinkel, den der Nebenantrieb weiterbewegt werden müsste, um die Masterwelle "einzuholen", zu groß ist, werden die Nebenantriebe nicht aktiviert bzw. deaktiviert. Dies hat den Sinn, gefährliche Synchronisationsbewegungen über große Drehwinkel zu vermeiden.

Weitere Merkmale der folgenden Erfindung ergeben sich aus den beigefügten Patentansprüchen, der nachfolgenden Beschreibung eines bevorzugten Ausführungsbeispiels der Erfindung sowie aus den beigefügten Zeichnungen. Darin zeigt:
- Fig. 1: eine Fertigungseinheit, die nach dem erfindungsgemäßen Verfahren arbeitet, in schematischer Seitenansicht,
- Fig. 2: eine weitere Ausführungsform einer nach dem erfindungsgemäßen Verfahren arbeitenden Fertigungseinheit in Vorderansicht,
- Fig. 3: eine Prinzipskizze einer Wirkkette in den Fertigungseinheiten gemäß Fig. 1 oder Fig. 2,
- Fig. 4: ein Diagramm, das exemplarisch Abhängigkeiten zwischen dem Drehwinkel eines handbetätigbaren Stellorgans einer Masterwelle sowie dem Drehwinkel eines Nebenantriebs der Fertigungseinheit gemäß Fig. 1 oder Fig. 2 zeigt, und
- Fig. 5: ein Diagramm, das exemplarisch zeitliche Abhängigkeiten der Drehzahl des handbetätigbaren Stellorgans der Masterwelle einer Fertigungseinheit gemäß Fig. 1 oder Fig. 2 zeigt.

Das in den Zeichnungen dargestellte Ausführungsbeispiel betrifft Fertigungseinheiten 10, 11 einer Produktionsanlage, nämlich einer Fertigungs- und/oder Verpackungsanlage für Zigaretten. Eine derartige Anlage umfasst üblicherweise eine Anzahl von Fertigungseinheiten, wie etwa eine Zigarettenherstellmaschine (Maker), eine sich an diese anschließende Verpackungsmaschine, einen Packer, eine nachfolgende Folieneinschlagmaschine (Cello), eine Verpackungsmaschine zum Herstellen von Gebinden aus mehreren Zigarettenpackungen (Stangenpacker) und einen Kartonierer, der die Packungsgebinde in einen Versandkarton verpackt.

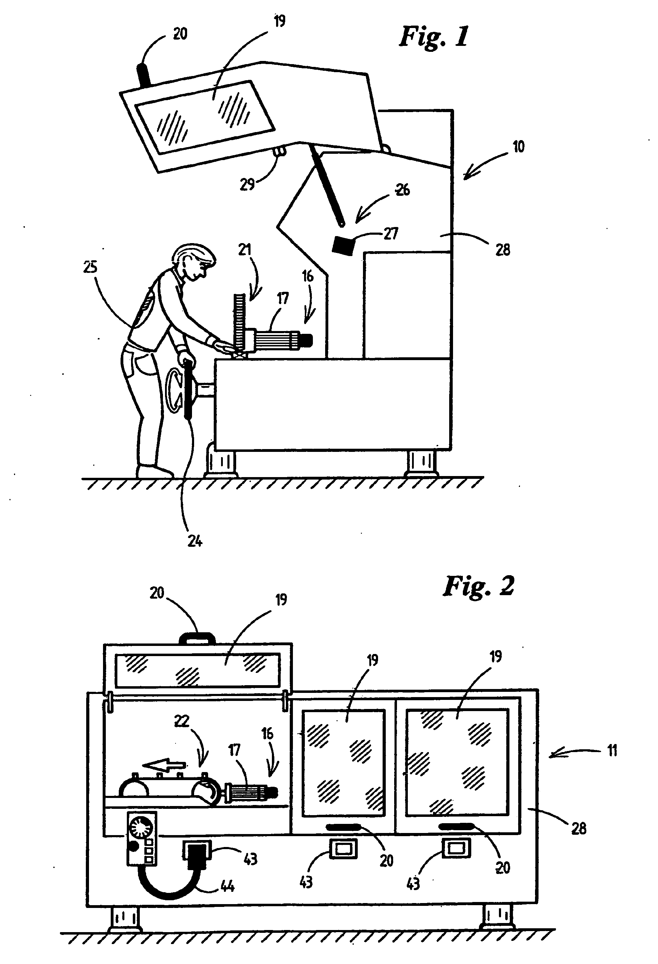

In den Fig. 1 und 2 sind exemplarisch zwei Fertigungseinheiten 10 und 11 einer derartigen Fertigungs- und/oder Verpackungsanlage für Zigaretten dargestellt. Jede der Fertigungseinheiten 10, 11 verfügt über einen Hauptantrieb 12, der eine Hauptwelle, nämlich eine Masterwelle 13 antreibt. Die Masterwelle 13 treibt nicht dargestellte, mit ihr in mechanischer Wirkverbindung stehende Aggregate der Fertigungseinheiten 10, 11 an. Der Hauptantrieb 12 ist als Servoantrieb ausgebildet mit Servomotor 14 und Servosteller 15 (Servoregelung und/oder Servosteuerung).

Jede der Fertigungseinheiten 10, 11 verfügt des Weiteren über mehrere, von dem jeweiligen Hauptantrieb 12 abhängige, ebenfalls als Servoantriebe ausgebildete Nebenantriebe 16 mit jeweils Servomotor 17 und Servosteller 18.

Von der Geschwindigkeit des Hauptantriebs 12 bzw. der Masterwelle 13 oder von dem jeweiligen Drehwinkel desselben werden die Geschwindigkeiten oder Drehwinkel sämtlicher Nebenantriebe 16, nämlich sämtlicher abhängiger Antriebe, direkt oder indirekt abgeleitet. Gegebenenfalls werden dazu vorgebbare Bewegungsgesetze berücksichtigt.

Die Fertigungseinheiten 10, 11 verfügen jeweils über Schutzeinrichtungen 19, nämlich Hauben oder Türen, die einzelne Bereiche der Fertigungseinheit 10, 11 nach außen abdecken. Die Hauben 19 verhindern, dass ein Bediener versehentlich mit sich bewegenden Teilen der Fertlgungseinheiten 10, 11 in Berührung kommen kann. Die Hauben 19 können von Hand mittels Griffen 20 geöffnet werden, vgl. Haube 19 in Fig. 1 sowie linke Haube 19 in Fig. 2.

Die Nebenantriebe 16 treiben unterschiedliche Aggregate an, etwa einen Revolver 21, einen Zahnriemen 22 oder einen Linearschieber 23.

Die Fertigungseinheit 10 weist des Weiteren ein mechanisches Handrad 24 auf, mit dem die Masterwelle 13 des Hauptantriebs 12 von Hand, nämlich von einem Bediener 25, bewegt werden kann. Das Handrad 24 ist im geschlossenen Zustand der Haube 19 nicht zugänglich, sondern von dieser bedeckt. In nachfolgend noch näher zu beschreibender Weise wird das Handrad 24 nach Öffnen der enlsprechenden Haube 19 mit der Masterwelle 13 gekoppelt, nämlich wirkverbunden.

Eine Sicherheitsschalteinrichtung 26 sorgt dafür, dass beim Öffnen der Haube 19 sämtliche Antriebe der jeweiligen Fertigungseinheit 10, 11, nämlich die jeweiligen Hauptantriebe 12 sowie die abhängigen Nebenantriebe 16, inaktiv geschaltet werden. Die von den Antrieben 12, 16 antreibbaren Aggregate, etwa die durch die Nebenantriebe 16 bewegten Aggregate 21, 22 und 23, werden entsprechend nicht mehr bewegt.

Im vorliegenden Beispiel umfasst die Sicherheitsschalteinrichtung 26 einen Sicherheitsschalter 27, der an dem Gehäuse 28 der Fertigungseinheit 10 angeordnet ist. Der Sicherheitsschalter 27 weist eine in besondere Weise geformte Ausnehmung auf, in die ein zu der Ausnehmung korrespondierendes Gegenstück, nämlich ein Schlüssel 29, vorzugsweise formschlüssig eingreifen kann. Der Schlüssel 29 ist an der Haube 19 angeordnet.

Die Position des Sicherheitsschalters 27 an dem Gehäuse 28 einerseits sowie die Position des Schlüssels 29 andererseits ist dabei so gewählt, dass der an dem Gehäuse 19 angeordnete Schlüssel 29 in die Ausnehmung des Sicherheitsschalters 27 eingreift, wenn die Haube 19 geschlossen ist, was zu einem entsprechenden schaltenden Kontakt führt. Bei Öffnung der Haube 19 dagegen wird diese nach oben verschwenkt und entsprechend wird der Schlüssel 29 aus der Ausnehmung des Sicherheitsschalters 27 entfernt: Der Kontakt ist unterbrochen.

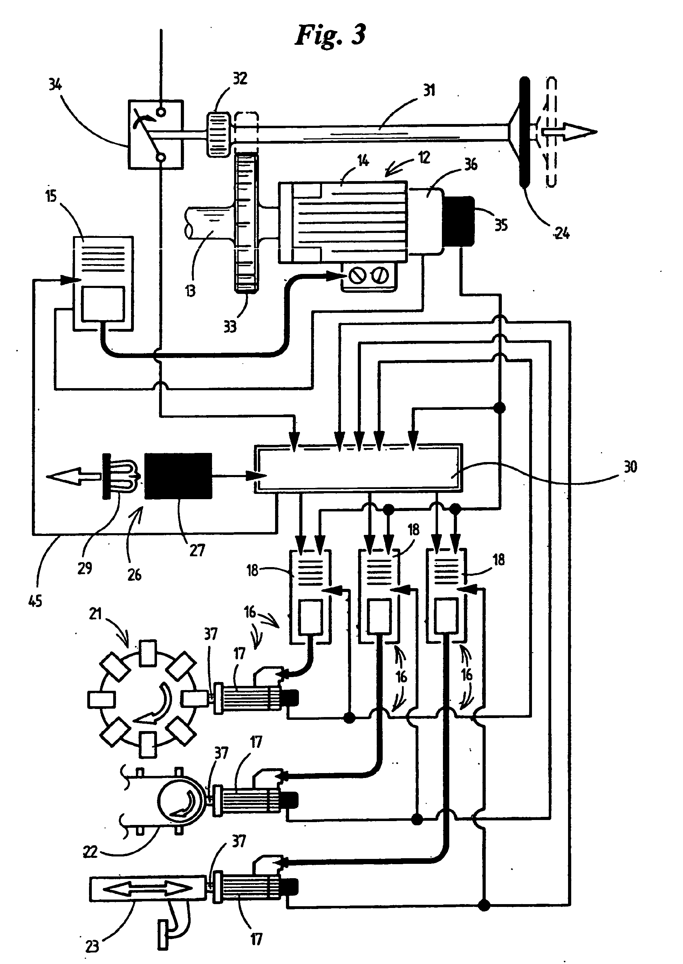

In besonderer Weise werden die Fertigungseinheiten 10, 11 im Einrichtbetrieb betrieben, nämlich gesteuert und/oder geregelt. Dies wird im Folgenden insbesondere anhand der Fig. 3-5 erläutert.

Im Servicefall, etwa wenn eines der von den Nebenantrieben 16 angetriebenen Aggregate 21, 22, 23 nicht oder nur fehlerhaft arbeitet, wird diejenige Haube 19 der Fertigungseinheit 10, 11 geöffnet, die das fehlerhafte Aggregat 21, 22, 23 abdeckt. Durch Öffnung der Haube 19 schaltet die Sicherheitsschalteinrichtung 26 und übermittelt ein entsprechendes Signal an eine Sicherheitssteuerungs- und/oder Regelungseinrichtung 30 der jeweiligen Fertigungseinheit 10, 11. Diese sorgt dafür, dass sämtliche Antriebe der jeweiligen Fertigungseinheit 10, 11, insbesondere die Nebenartriebe 16, inaktiv geschaht werden, nämlich in einen Zustand überführt werden, in dem ein insbesondere ungewolltes Anlaufen der Antriebe 12, 16 im Wesentlichen ausgeschlossen ist.

Zu diesem Zweck werden sämtliche Servosteller 15, 18 und/oder die Servomotoren 14, 17 in den sicheren Stillstand überführt, etwa spannungs- und/oder stromlos geschaltet. Gefährliche Bewegungen der Aggregate 21, 22, 23 sind daher unmittelbar nach dem Öffnen der Schutzhaube 19 ausgeschlossen.

Im Anschluss wird das Handrad 24 von einem Bediener 25 mit der Masterwelle 13 des Hauptantriebs 12 gekoppelt. Dazu wird das Handrad 24 in die in Fig. 3 durch einen Pfeil dargestellte Richtung gezogen, bis ein mit der Handradachse 31 drehfest verbundenes Antriebszahnrad 32, nämlich ein Ritzel, in Wirkverbindung mit einem drehfest an der Masterwelle 13 angeordneten Zahnrad 33 steht. Drehbewegungen des Handrads 24 führen in diesem gekoppelten Zustand unmittelbar zu Drehbewegungen der Masterwelle 13. Der Kopplungsvorgang des Handrads 24 mit der Masterwelle 13 führt des Weiteren dazu, dass ein in entsprechender Wirkverbindung mit dem Handrad 24 bzw. der Achse 31 des Handrads stehender Schalter 34 geschaltet wird. Dieser Schaltvorgang wird von der Sicherheitssteuerungs- und/oder Regelungseinrichtung 30 erkannt. Der Schaltvorgang ist notwendige Bedingung für die weiteren Steuerungs- und/oder Regelungsabläufe:

Bei weiterer Drehung des Handrads 24 durch den Bediener 25 werden zum einen die Masterwelle 13 sowie die von der Masterwelle 13 unmittelbar angetriebenen Aggregate bewegt. Zum anderen erfasst ein der Masterwelle 13 zugeordneter Drehgeber 35 die durch das Handrad 24 bewirkten Rotationen der Masterwelle 13, insbesondere den Drehwinkel und/oder die Drehzahl der Masterwelle 13.

Die Signale des Drehgebers 35 werden der Sicherheitssteuerungs- und/oder Regelungseinrichtung 30 übermittelt. Wenn das Handrad 24 von dem Bediener 25 um einen vorbestimmten und in der Sicherheitssteuerung 30 hinterlegten Drehwinkel gedreht wurde, schaltet die Sicherheitssteuerungs- und/oder Regelungseinrichtung 30 die Nebenantriebe 16 aktiv. In einer bevorzugten Ausführungsform der Erfindung werden die Nebenantriebe 16 dabei von dem Zustand "sicherer Stillstand" bzw. "sicherer Halt" in den normalen Betriebszustand überführt, in dem die Nebenantriebe 16 anlaufen können. Zu dem vorgenannten Zweck übermittelt die Sicherheitssteuerungs- und/oder Regelungseinrichtung 30 entsprechende Freigabesignale an die Servosteller 18 der Nebenantriebe 16.

Die Signale des Drehgebers 35 werden auch den Servostellern 18, nämlich entsprechenden Signaleingängen der Servosteller 18, zugeführt. Abhängig von diesen Signalen steuern bzw. regeln die Servosteller 18 die Nebenantriebe 16.

In besonderer Weise werden die Nebenantriebe 16 mit dem Hauptantrieb 12 dabei zunächst synchronisiert: Nachdem der Bediener 25 die Masterwelle 13 durch Drehung des Handrads 24 um einen vorgegebenen Drehwinkel verdreht hat, wird die Masterwelle 13 durch eine ihr zugeordnete sowie auf sie einwirkende mechanische Bremse 36 kurzzeitig gestoppt. Alternativ zu der mechanischen Bremse 36 könnte beispielsweise auch ein Gegenmoment des Servomotors 14 des Hauptantriebs 12 als Bremse genutzt werden.

In der Zeit, die der Bremsvorgang benötigt oder in der Zeit des durch den Bremsvorgang eingeleiteten Stillstands der Masterwelle 13 werden die Nebenantriebe 16 auf den Hauptantrieb 12 "aufsynchronisiert", d. h. die Antriebswellen 37 der Nebenantriebe 16 werden um geeignete Drehwinkel weiterbewegt, die zur Synchronisation der Wellen 13, 37 notwendig sind.

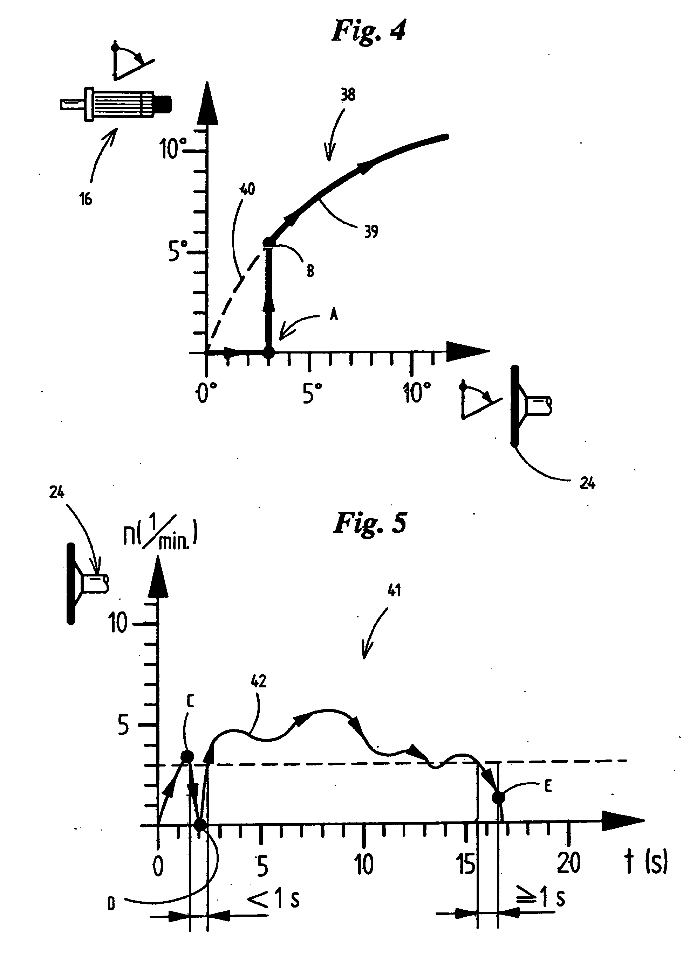

Fig. 4 zeigt die Zusammenhänge zwischen der Rotation des Handrads 24 einerseits und der Rotation der Wellen 37 in einem Diagramm 38. Aufgetragen ist auf der Abszisse des Diagramms 38 der Drehwinkel, um den das Handrad 24 von dem Bediener 25 verdreht wird. Abhängig von der Handraddrehung ist auf der Ordinate der Drehwinkel eines Nebenantriebs 16 bzw. der Welle 37 eines Nebenantriebs 16 dargestellt. In durchgezogener Liniendarstellung ist der tatsächliche Zusammenhang zwischen diesen beiden Größen im vorliegenden Einrichtbetrieb gezeigt:

Nach anfänglicher Drehung des Handrads 24 ist der Nebenantrieb 16 noch bis zu einem Handraddrehwinkel von 3° inaktiv. Erst dann wird der Nebenantrieb 16 aktiv geschaltet und kann dem Handrad 24 folgen. Durch die vorhergehende Drehung des Handrads 24 bzw. durch die entsprechende Drehung der Masterwelle 13 eilt die Masterwelle 13 dem Nebenantrieb 16 allerdings vor.

Im Normalbetrieb dagegen, nämlich während des vollautomatischen Betriebs, wäre die Antriebswelle 37 dem Handrad 24 bzw. der Masterwelle 13 bereits gefolgt. Dieser Normalbetriebsverlauf ist mit der gestrichelten Linie 40 gekennzeichnet. Um im Einrichtbetrieb die Differenz der Drehwinkel des Handrads 24 bzw. der Masterwelle 13 einerseits und des Nebenantriebs 16 bzw. der Antriebswelle 37 des Nebenantriebs 16 andererseits auszugleichen, wird automatisch bei einem vorbestimmten Drehwinkel, nämlich einem Drehwinkel von 3°, die Bremse 36 aktiviert, d. h. die Masterwelle 13 wird gestoppt (Position A in Diagramm 38).

Es werden demnach im Wesentlichen zeitgleich die Bremse 36 aktiviert sowie der Nebenantrieb 16 aktiviert.

Bei gebremster Masterwelle 13 bzw. gebremsten Handrad 24 wird nunmehr der Nebenantrieb 16, insbesondere die Antriebswelle 37 des Nebenantriebs 16, automatisch um einen geeigneten Drehwinkel weiterbewegt, bei dem Synchronität der jeweiligen Antriebe 12, 16 bzw. der jeweiligen Wellen 13, 37, wiederhergestellt ist (Position B in Diagramm 38). Im Anschluss an diese Synchronisationsbewegung der Welle 37 des Nebenantriebs 16 wird die Bremse 36 gelöst, sodass der nunmehr mit dem Hauptantrieb 12 synchronisierte Nebenantrieb 16 in vorgesehener Weise dem Hauptantrieb 12 folgt.

In Fig. 5 ist ein weiteres Diagramm 41 gezeigt. Anhand dieses Diagramms 41 werden zusätzliche und/oder alternative Aspekte des erfindungsgemäßen Verfahrens beschrieben.

Auf der Abszisse des Diagramms 41 ist die Zeit t in Sekunden aufgetragen, auf der Ordinate die Drehzahl des Handrads 24 pro Minute. An dem Verlauf der Kurve 42 sind verschiedene Zusammenhänge zu erkennen:

Bis zu einer vorbestimmten Drehzahl, nämlich drei Drehungen pro Minute (Position C in Diagramm 41), kann die Drehzahl des Handrades 24 kontinuierlich erhöht werden. Der jeweilige Nebentrieb 16 ist noch inaktiv geschaltet. Erreicht die Drehzahl des Handrades 24 allerdings Werte, die über dieser vorbestimmten Drehzahl liegen, wird das Handrad 24 automatisch kurzzeitig abgebremst bis zur Drehzahl 0 (Position D in Diagramm 41). Des Weiteren wird der Nebenantrieb 16 aktiv geschaltet und automatisch bei gebremstem Handrad 24 weiterbewegt, um die Synchronität mit dem Hauptantrieb bzw. mit der Masterwelle 13 herzustellen.

Im Anschluss daran wird die Bremse 36 automatisch gelöst und das Handrad 24 kann in gewünschter Weise mit vorgesehener Drehgeschwindigkeit weitergedreht werden.

Alternativ zu dem in Fig. 4 dargestellten, drehwinkelabhängigen Einleiten des Bremsvorgangs kann demnach das Aktivieren des Nebenantriebs 16 sowie das Auslösen der Bremse 36 auch abhängig von der Drehzahl des Handrades 24 erfolgen. Wie der Fachmann erkennt, sind hier vielfältige Möglichkeiten denkbar.

Weiter ist folgender erfindungsgemäßer Aspekt wichtig:

Wenn die Drehgeschwindigkeit des Handrades 24 für eine vorbestimmte Zeitdauer, etwa eine Sekunde, unterhalb eines vorbestimmten Wertes sackt, nämlich unterhalb von drei Drehungen pro Minute, wird der Nebenantrieb 16 deaktiviert, nämlich in den sicheren Stillstand überführt (Position E in Diagramm 41).

Ein erneutes Aktivieren des Nebenantriebs 16 kann im Anschluss an die Deaktivierung erfolgen, wenn das Handrad 24 erneut um einen vorbestimmten Drehwinkel gedreht wird (Ausführungsform Fig. 4) oder eine vorbestimmte Drehzahl erreicht (Ausführungsform Fig. 5) wird.

Gemäß einer weiteren Besonderheit der vorliegenden Erfindung ist schließlich vorgesehen, unterschiedlichen Schutzeinrichtungen 19 der Fertigungseinheiten 10, 11 jeweils lokale Anschlüsse 43 zuzuordnen, an die handbetätigbare Stellorgane, insbesondere elektronische Handräder 44, angeschlossen werden können. Dabei ist die Sicherheitssteuerung und/oder -regelung 30 derart ausgebildet, dass mittels des dem jeweiligen Anschluss 43 zugeordneten Elektronikhandrads 44 jeweils nur diejenigen Aggregate 21, 22, 23 der Fertigungseinheit 10, 11 bewegt werden können, die dem entsprechenden Anschluss 43 zugeordnet sind.

In Fig. 2 ist beispielsweise das Aggregat 22 dem linken Anschluss 43 zugeordnet. Die Sicherheitssteuerungs- und/oder Regelungseinrichtung 30 erkennt, dass das Elektronikhandrad 44 in den linken Anschluss 43 eingesteckt wurde.

Beim Betätigen des Elektronikhandrads 44 durch einen Bediener 25 wird ausschließlich der auf das Aggregat 22 wirkendende Nebenantrieb 16 aktiviert, nicht aber die anderen den Anschlüssen 43 zugeordneten Nebenantriebe 16. Dies gilt auch dann, wenn die in der Fig. 2 mittlere bzw. rechte Haube 19 geöffnet sein sollte.

Dies hat den Sinn zu verhindern, dass von dem Bediener 25 bei Betätigung des Handrads 44 möglicherweise weit entfernte Aggregate 21, 22, 23 der Fertigungseinheit 10, 11 bewegt werden, die er nicht mehr im Blickfeld hat und in die möglicherweise zeitgleich eine andere Person eingreift.

### Bezugszeichenliste

- 10: Fertigungseinheit
- 11: Fertigungseinheit
- 12: Hauptantrieb
- 13: Masterwelle
- 14: Servomotor Hauptantrieb
- 15: Servosteller Hauptantrieb
- 16: Nebenantrieb
- 17: Servomotor Nebenantrieb
- 18: Servosteller Nebenantrieb
- 19: Haube
- 20: Griff
- 21: Revolver
- 22: Zahnriehmen
- 23: Linearschieber
- 24: Handrad
- 25: Bediener
- 26: Sicherheitsschalteinrichtung
- 27: Sicherheitsschalter
- 28: Gehäuse
- 29: Schlüssel
- 30: Sicherheitssteuerungs- und/oder Regelungseinrichtung
- 31: Handradachse
- 32: Antriebszahnrad
- 33: Zahnrad
- 34: Schalter
- 35: Drehgeber
- 36: Bremse
- 37: Antriebswelle
- 38: Diagramm
- 39: Kurve
- 40: Kurve
- 41: Diagramm
- 42: Kurve
- 43: Anschluss
- 44: Elektronikhandrad

## Patentansprüche

1. Verfahren zum Betreiben einer Fertigungseinheit einer Produktionsanlage im Einrichtbetrieb, insbesondere einer Fertigungs- und/oder Verpackungsanlage, bevorzugt für Zigaretten oder andere rauchbare Artikel, mit wenigstens einem Hauptantrieb (12) und zumindest einem vorzugsweise als Servoantrieb ausgebildeten Nebenantrieb (16), dessen Bewegung direkt oder indirekt von der Bewegung einer Masterwelle (13) des Hauptantriebs (12) abhängt, sowie mit einem mit der Masterwelle mechanisch oder elektronisch koppelbaren, von einem Bediener handbetätigbaren Stellorgan (24, 44), vorzugsweise einem Handrad, mit dem die Masterwelle (13) des Hauptantriebes (12) außerhalb des Normalbetriebes bei Bedarf von einem Bediener in Rotation versetzt werden kann, **dadurch gekennzeichnet, dass** der Nebenantrieb (16) nach Koppelung des Stellorgans (24, 44) mit der Masterwelle (13) ausgelöst durch eine - vorzugsweise mindestens einer vorbestimmten Bedingung entsprechende - Betätigung des Stellorgans (24, 44) ausgehend von einem inaktiven Zustand des Nebenantriebs, nämlich einem Zustand, in dem ein insbesondere ungewolltes Anlaufen des Nebenantriebes (16) im Wesentlichen ausgeschlossen ist, in einen aktiven Zustand überführt wird, nämlich in einen Zustand, in dem ein Anlaufen des Nebenantriebs (16) ermöglicht ist.

2. Verfahren gemäß Anspruch 1, **dadurch gekennzeichnet, dass** die Aktivierung des Nebenantriebs (16) abhängig von der durch die Betätigung des Stellorgans (24, 44) bewirkten Drehzahl des Stellorgans und/oder der Masterwelle (13) erfolgt und/oder abhängig von dem durch die Stellorganbetätigung bewirkten Drehwinkel des Stellorgans (24, 44) und/oder der Masterwelle (13) und/oder abhängig von der Zeit, vorzugsweise bei einem Wert der Drehzahl oder des Drehwinkels des Stellorgans (24, 44) und/oder der Masterwelle (13), der - bevorzugt über eine vorbestimmte Zeitspanne - gleich oder größer einem vorbestimmten Drehzahlgrenzwert ist.

3. Verfahren gemäß Anspruch 1 oder 2, **dadurch gekennzeichnet, dass** der Nebenantrieb (16) nach einer erfolgten Aktivierung abhängig von der Drehzahl und/oder dem Drehwinkel des Stellorgans (24, 44) und/oder der Masterwelle (13) und/oder der Welle (37) des Nebenantriebs (16) und/oder abhängig von der Zeit deaktiviert wird, nämlich in den inaktiven Zustand überführt wird, bevorzugt bei einem Wert der Drehzahl des Stellorgans (24, 44) und/oder der Masterwelle (13), der - vorzugsweise über eine vorbestimmte Zeitspanne - gleich oder kleiner einem vorbestimmten Drehzahlgrenzwert ist.

4. Verfahren gemäß einem oder mehreren der vorhergehenden Ansprüche, **dadurch gekennzeichnet, dass** der Nebenantrieb (16) durch Betätigung des Stellorgans (24, 44) aus einem sicheren Stillstand, insbesondere aus dem sicheren Halt, in den Betriebszustand, insbesondere den Betriebszustand der sogenannten Lageregelung, überführt wird.

5. Verfahren gemäß einem oder mehreren der vorhergehenden Ansprüche, **dadurch gekennzeichnet, dass** eine durch Betätigung des Stellorgans (24, 44) bewirkte Bewegung des Stellorgans (24, 44) und/oder der Masterwelle (13) abhängig von der Drehzahl und/oder abhängig vom Drehwinkel des Stellorgans (24, 44) und/oder der Masterwelle (13) für eine kurze Zeitspanne gebremst wird, insbesondere gestoppt wird, bevorzugt bevor eine Aktivierung des Nebenantriebs (16) erfolgt ist, sodass eine Synchronisierung der Welle (37) des Nebenantriebs (16) mit der Masterwelle (13) des Hauptantriebs (12) ermöglicht wird, nämlich eine Anpassung des Drehwinkels der Welle (37) des Nebenantriebs (16) an den Drehwinkel der Masterwelle (13) des Hauptantriebs (12).

6. Verfahren gemäß einem oder mehreren der vorhergehenden Ansprüche, **dadurch gekennzeichnet, dass** der Nebenantrieb (16) auch durch Betätigung des.Stellorgans (24, 44) nicht aktiviert wird oder dass der Nebenantrieb (16) nach zuvor erfolgter Aktivierung deaktiviert wird, falls der Drehwinkel der Welle (37) des Nebenantriebs (16) von mindestens einer vorgegebenen Bedingung abweicht, bevorzugt falls der für eine Synchronisation der Welle (37) notwendige Drehwinkel größer oder gleich einem vorbestimmten Grenzwert ist.

7. Verfahren gemäß einem oder mehreren der vorhergehenden Ansprüche, **dadurch gekennzeichnet, dass** zur Aktivierung des Nebenantriebs (16) eine Sicherheitssteuer- und/oder Regelungseinrichtung (30) der Produktionsanlage oder der Fertigungseinheit (10, 11) mindestens ein Freigabesignal an den Nebenantrieb (16) sendet.

8. Fertigungseinheit einer Produktionsanlage, insbesondere einer Fertigungs- und/oder Verpackungsanlage für Zigaretten oder andere rauchbare Artikel, mit zumindest einem Hauptantrieb (12) und zumindest einem vorzugsweise als Servoantrieb ausgebildeten Nebenantrieb (16), dessen Bewegung direkt oder indirekt von der Bewegung einer Masterwelle (13) des Hauptantriebs (12) abhängt, sowie mit einem mit der Masterwelle (13) mechanisch oder elektronisch koppelbaren, von einem Bediener handbetätigbaren Stellorgan (24, 44), vorzugsweise einem Handrad, mit dem die Masterwelle (13) des Hauptantriebes (12) außerhalb des Normaibetriebes bei Bedarf von einem Bediener in Rotation versetzbar ist, **dadurch gekennzeichnet, dass** dem Nebenantrieb (16) mindestens eine Sicherheitssteuerungs- und/oder -regelungseinrichtung (30) zugeordnet ist, die derart ausgebildet ist, dass der Nebenantrieb (16) nach Koppelung des Stellorgans (24, 44) mit der Masterwelle (13) ausgelöst durch eine - vorzugsweise mindestens einer vorbestimmten Bedingung entsprechende - Betätigung des Stellorgans (24, 44) ausgehend von einem inaktiven Zustand des Nebenantriebs (16), nämlich einem Zustand, in dem ein insbesondere ungewolltes Anlaufen des Nebenantriebes (16) im Wesentlichen ausgeschlossen ist, in einen aktiven Zustand überführbar ist, nämlich in einen Zustand, in dem ein Anlaufen des Nebenantriebs (16) ermöglicht ist.

9. Fertigungseinheit gemäß Anspruch 9, **dadurch gekennzeichnet, dass** dem Stellorgan (24, 44) und/oder dem Hauptantrieb (12) eine Bremseinrichtung (36) zugeordnet ist, mit der eine Bewegung des Stellorgans (24, 44) und/oder der Masterwelle (13) des Hauptantriebs (12) abbremsbar ist.

## Claims

1. Method for operating a production unit of a production installation in set-up operation, in particular of a production and/or packaging installation, preferably for cigarettes or other smokable articles, having at least one main drive (12) and at least one secondary drive (16) which is formed preferably as a servo drive and the movement of which depends directly or indirectly on the movement of a master shaft (13) of the main drive (12), and also having an actuating member (24, 44), preferably a hand wheel, which is mechanically or electronically couplable to the master shaft, is actuable manually by an operator and with which the master shaft (13) of the main drive (12) can be set in rotation by an operator as required outside normal operation, **characterized in that**, after the actuating member (24, 44) has been coupled to the master shaft (13), the secondary drive (16) is transferred into an active state, i.e. into a state in which the secondary drive (16) is allowed to start, in a manner triggered by actuation - preferably corresponding to at least one predetermined condition - of the actuating member (24, 44), starting from an inactive state of the secondary drive, i.e. a state in which in particular undesired starting of the secondary drive (16) is substantially precluded.

2. Method according to Claim 1, **characterized in that** the secondary drive (16) is activated in a manner dependent on the rotational speed of the actuating member and/or of the master shaft (13), said rotational speed being brought about by the actuation of the actuating member (24, 44), and/or in a manner dependent on the rotation angle of the actuating member (24, 44) and/or of the master shaft (13), said rotation angle being brought about by the actuation of the actuating member, and/or in a manner dependent on time, preferably at a value of the rotational speed or of the rotation angle of the actuating member (24, 44) and/or of the master shaft (13) which - preferably over a predetermined period of time - is equal to or greater than a predetermined rotational speed threshold value.

3. Method according to Claim 1 or 2, **characterized in that** the secondary drive (16), after successful activation, is deactivated, i.e. transferred into the inactive state, in a manner dependent on the rotational speed and/or the rotation angle of the actuating member (24, 44) and/or of the master shaft (13) and/or of the shaft (37) of the secondary drive (16) and/or in a manner dependent on time, preferably at a value of the rotational speed of the actuating member (24, 44) and/or of the master shaft (13) which - preferably over a predetermined period of time - is equal to or less than a predetermined rotational speed threshold value.

4. Method according to one or more of the preceding claims, **characterized in that** the secondary drive (16) is transferred from a secure standstill, in particular from the secure hold, into the operating state, in particular the operating state of what is known as position control, by actuation of the actuating member (24, 44).

5. Method according to one or more of the preceding claims, **characterized in that** a movement of the actuating member (24, 44) and/or of the master shaft (13), which movement is brought about by actuation of the actuating member (24, 44), is braked for a short period of time, in particular stopped, in a manner dependent on the rotational speed and/or dependent on the rotation angle of the actuating member (24, 44) and/or of the master shaft (13), preferably before the secondary drive (16) has been activated, such that it is possible to synchronize the shaft (37) of the secondary drive (16) with the master shaft (13) of the main drive (12), i.e. to match the rotation angle of the shaft (37) of the secondary drive (16) to the rotation angle of the master shaft (13) of the main drive (12).

6. Method according to one or more of the preceding claims, **characterized in that** the secondary drive (16) is also not activated by actuation of the actuating member (24, 44), or **in that** the secondary drive (16) is deactivated after a previous activation, if the rotation angle of the shaft (37) of the secondary drive (16) deviates from at least one predetermined condition, preferably if the rotation angle necessary for synchronization of the shaft (37) is greater than or equal to a predetermined threshold value.

7. Method according to one or more of the preceding claims, **characterized in that**, in order to activate the secondary drive (16), a safety control and/or regulating device (30) of the production installation or of the production unit (10, 11) sends at least one release signal to the secondary drive (16).

8. Production unit of a production installation, in particular of a production and/or packaging installation for cigarettes or other smokable articles, having at least one main drive (12) and at least one secondary drive (16) which is formed preferably as a servo drive and the movement of which depends directly or indirectly on the movement of a master shaft (13) of the main drive (12), and also having an actuating member (24, 44), preferably a hand wheel, which is mechanically or electronically couplable to the master shaft, is actuable manually by an operator and with which the master shaft (13) of the main drive (12) can be set in rotation by an operator as required outside normal operation, **characterized in that** the secondary drive (16) is assigned at least one safety control and/or regulating device (30) which is formed such that, after the actuating member (24, 44) has been coupled to the master shaft (13), the secondary drive (16) is transferable into an active state, i.e. into a state in which the secondary drive (16) is allowed to start, in a manner triggered by actuation-preferably corresponding to at least one predetermined condition - of the actuating member (24, 44), starting from an inactive state of the secondary drive (16), i.e. a state in which in particular undesired starting of the secondary drive (16) is substantially precluded.

9. Production unit according to Claim 9, **characterized in that** the actuating member (24, 44) and/or the main drive (12) is assigned a braking device (36), by way of which a movement of the actuating member (24, 44) and/or of the master shaft (13) of the main drive (12) is brakable.

## Revendications

1. Procédé pour exploiter une unité de fabrication d'une installation de production en mode réglage, en particulier d'une installation de fabrication et/ou d'emballage, de préférence pour des cigarettes ou d'autres articles à fumer, comprenant au moins un entraînement principal (12) et au moins un entraînement auxiliaire (16) qui est réalisé de préférence sous forme d'entraînement asservi et dont le mouvement dépend directement ou indirectement du mouvement d'un arbre maître (13) de l'entraînement principal (12), et comprenant un actionneur (24, 44) pouvant être actionné manuellement par un opérateur et pouvant être accouplé mécaniquement ou électroniquement à l'arbre maître, de préférence un volant à main à l'aide duquel l'arbre maître (13) de l'entraînement principal (12) peut, au besoin, être mis en rotation par un opérateur en dehors du fonctionnement normal, **caractérisé en ce qu**'après l'accouplement de l'actionneur (24, 44) à l'arbre maître (13), l'entraînement auxiliaire (16) est transféré, d'une manière déclenchée par un actionnement (correspondant de préférence à au moins une condition prédéfinie) de l'actionneur (24, 44), à partir d'un état inactif de l'entraînement auxiliaire, à savoir un état dans lequel un démarrage en particulier indésirable de l'entraînement auxiliaire (16) est essentiellement exclu, dans un état actif, à savoir dans un état dans lequel un démarrage de l'entraînement auxiliaire (16) est rendu possible.

2. Procédé selon la revendication 1, **caractérisé en ce que** l'activation de l'entraînement auxiliaire (16) s'effectue en fonction de la vitesse de rotation de l'actionneur et/ou de l'arbre maître (13) qui est provoquée par l'actionnement de l'actionneur (24, 44), et/ou en fonction de l'angle de rotation de l'actionneur (24, 44) et/ou de l'arbre maître (13) qui est provoqué par l'actionnement de l'actionneur, et/ou en fonction du temps, de préférence à une valeur de la vitesse de rotation ou de l'angle de rotation de l'actionneur (24, 44) et/ou de l'arbre maître (13) qui, de préférence sur un intervalle de temps prédéfini, est supérieure ou égale à une valeur limite de vitesse de rotation prédéfinie.

3. Procédé selon la revendication 1 ou 2, **caractérisé en ce qu**'après qu'une activation a été effectuée, l'entraînement auxiliaire (16) est désactivé en fonction de la vitesse de rotation et/ou de l'angle de rotation de l'actionneur (24, 44) et/ou de l'arbre maître (13) et/ou de l'arbre (37) de l'entraînement auxiliaire (16) et/ou en fonction du temps, à savoir transféré dans l'état inactif, de préférence à une valeur de la vitesse de rotation de l'actionneur (24, 44) et/ou de l'arbre maître (13) qui, de préférence sur un intervalle de temps prédéfini, est inférieure ou égale à une valeur limite de vitesse de rotation prédéfinie.

4. Procédé selon l'une quelconque ou plusieurs des revendications précédentes, **caractérisé en ce que** l'entraînement auxiliaire (16) peut être transféré, par actionnement de l'actionneur (24, 44), à partir d'une immobilisation sûre, en particulier à partir de l'arrêt sûr, dans l'état de fonctionnement, en particulier l'état de fonctionnement de ce que l'on nomme la régulation de la position.

5. Procédé selon l'une quelconque ou plusieurs des revendications précédentes, **caractérisé en ce qu'**un mouvement de l'actionneur (24, 44) et/ou de l'arbre maître (13) provoqué par un actionnement de l'actionneur (24, 44) est freiné, en particulier stoppé, pendant un court intervalle de temps en fonction de la vitesse de rotation et/ou en fonction de l'angle de rotation de l'actionneur (24, 44) et/ou de l'arbre maître (13), de préférence avant qu'une activation de l'entraînement auxiliaire (16) ne soit effectuée, de telle sorte qu'une synchronisation de l'arbre (37) de l'entraînement auxiliaire (16) avec l'arbre maître (13) de l'entraînement principal (12) soit rendue possible, à savoir un ajustage de l'angle de rotation de l'arbre (37) de l'entraînement auxiliaire (16) à l'angle de rotation de l'arbre maître (13) de l'entraînement principal (12).

6. Procédé selon l'une quelconque ou plusieurs des revendications précédentes, **caractérisé en ce que** l'entraînement auxiliaire (16) n'est pas non plus activé par l'actionnement de l'actionneur (24, 44) ou **en ce que** l'entraînement auxiliaire (16) est désactivé après qu'une activation a été préalablement effectuée, si l'angle de rotation de l'arbre (37) de l'entraînement auxiliaire (16) s'écarte d'au moins une condition prédéfinie, de préférence si l'angle de rotation nécessaire à une synchronisation de l'arbre (37) est supérieur ou égal à une valeur limite prédéfinie.

7. Procédé selon l'une quelconque ou plusieurs des revendications précédentes, **caractérisé en ce qu**'en vue de l'activation de l'entraînement auxiliaire (16), un dispositif de commande de sécurité et/ou de régulation (30) de l'installation de production ou de l'unité de fabrication (10, 11) envoie au moins un signal de validation à l'entraînement auxiliaire (16).

8. Unité de fabrication d'une installation de production, en particulier d'une installation de fabrication et/ou d'emballage pour des cigarettes ou d'autres articles à fumer, comprenant au moins un entraînement principal (12) et au moins un entraînement auxiliaire (16) qui est réalisé de préférence sous forme d'entraînement asservi et dont le mouvement dépend directement ou indirectement du mouvement d'un arbre maître (13) de l'entraînement principal (12), et comprenant un actionneur (24, 44) pouvant être actionné manuellement par un opérateur et pouvant être accouplé mécaniquement ou électroniquement à l'arbre maître (13), de préférence un volant à main à l'aide duquel l'arbre maître (13) de l'entraînement principal (12) peut, au besoin, être mis en rotation par un opérateur en dehors du fonctionnement normal, **caractérisée en ce qu**'au moins un dispositif de commande de sécurité et/ou de régulation (30) est associé à l'entraînement auxiliaire (16), lequel dispositif est réalisé de telle sorte qu'après l'accouplement de l'actionneur (24, 44) à l'arbre maître (13), l'entraînement auxiliaire (16) peut être transféré, d'une manière déclenchée par un actionnement (correspondant de préférence à au moins une condition prédéfinie) de l'actionneur (24, 44), à partir d'un état inactif de l'entraînement auxiliaire (16), à savoir un état dans lequel un démarrage en particulier indésirable de l'entraînement auxiliaire (16) est essentiellement exclu, dans un état actif, à savoir dans un état dans lequel un démarrage de l'entraînement auxiliaire (16) est rendu possible.

9. Unité de fabrication selon la revendication 9, **caractérisée en ce qu**'un dispositif de freinage (36) est associé à l'actionneur (24, 44) et/ou à l'entraînement principal (12), à l'aide duquel dispositif un mouvement de l'actionneur (24, 44) et/ou de l'arbre maître (13) de l'entraînement principal (12) peut être freiné.
